# EUROPEAN PATENT APPLICATION

(11) **EP 3 069 869 A1**
(43) Date of publication of application: **21.09.2016**
(21) Application number: 14862644.3
(22) Date of filing: 12.11.2014
(51) Int. Cl.: B32B 25/08, B32B 27/34, B60C 5/14, C08J 5/18, C08L 21/00, C08L 61/06, C08L 77/00

(54) **LAMINATE OF FILM AND RUBBER COMPOSITION, AND TIRE INCLUDING SAME**

(30) Priority: 12.11.2013 JP 2013234350; 03.03.2014 JP 2014040797
(71) Applicant: The Yokohama Rubber Co., Ltd., Tokyo 105-8685 (JP)
(72) Inventor: TOMOI, Shusaku, Hiratsuka-shi Kanagawa 254-8601 (JP); SHIBATA, Hirokazu, Hiratsuka-shi Kanagawa 254-8601 (JP); SATO, Shun, Hiratsuka-shi Kanagawa 254-8601 (JP); HARA, Yuichi, Hiratsuka-shi Kanagawa 254-8601 (JP)
(74) Representative: Hoffmann Eitle
(86) International application number: PCT/JP2014/079980
(87) International publication number: WO 2015/072489

(57) **Abstract**

A laminate of a film and a rubber composition, the film being formed from a thermoplastic elastomer composition in which rubber particles are dispersed in a thermoplastic resin, wherein the Sdr value of the film in contact with the rubber composition is 0.042 or more.

## Description

### TECHNICAL FIELD

The present invention relates to a laminate of a film, composed of a thermoplastic elastomer composition, and a rubber composition, and a tire including the same.

### BACKGROUND ART

Patent Literature 1 discloses a laminate of a film, composed of a thermoplastic elastomer composition, and a rubber composition. Adhesive strength at the interface between layers of the film composed of a thermoplastic elastomer composition and the rubber composition is improved by incorporating a condensate having a phenol structure and a basic component that generates formaldehyde in the rubber composition at a specific blending ratio, and adjusting the incorporation of sulfur and a vulcanization accelerator.

Patent Literature 2 discloses a laminate of a film composed of a thermoplastic elastomer composition, obtained by dispersing an elastomer component in a polyamide resin, and a rubber composition. Adhesive strength at the interface between layers of the film composed of a thermoplastic elastomer composition and the rubber composition is improved by containing 100 parts by weight of rubber and 1 part by weight to 20 parts by weight of a plasticizer having a solubility parameter (SP value) in which the absolute value of the difference with the solubility parameter of the polyamide resin is 3 or less.

### CITATION LIST

### Patent Literature

Patent Literature 1: Japanese Unexamined Patent Publication No. 2012-177071
Patent Literature 2: Japanese Unexamined Patent Publication No. 2013-6387

### SUMMARY OF THE INVENTION

### PROBLEMS TO BE SOLVED BY THE INVENTION

An object of the present invention is to improve adhesive strength at the interface between layers of a film, composed of a thermoplastic elastomer composition, and a rubber composition in a laminate of the film and the rubber composition that can be used as an air permeation preventive layer (such as an inner liner material) of a pneumatic tire.

### MEANS FOR SOLVING THE PROBLEMS

As a result of conducting extensive studies in consideration of the aforementioned problems, the inventors of the present invention surprisingly found that adhesive strength at the interface of layers of a film, composed of a thermoplastic elastomer composition, and a rubber composition is improved by making the Sdr (Developed Interfacial Area Ratio: ISO25178) value of the film in contact with the rubber composition to be 0.042 or more, thereby leading to completion of the present invention.

Thus, the present invention includes the following aspects.
[1] A laminate of a film and a rubber composition, the film being composed of a thermoplastic elastomer composition in which rubber particles are dispersed in a thermoplastic resin, wherein the Sdr value of the film in contact with the rubber composition is 0.042 or more.
[2] The laminate according to [1], wherein the thermoplastic resin is at least one thermoplastic resin selected from the group consisting of Nylon 6, Nylon 66, Nylon 46, Nylon 11, Nylon 12, Nylon 69, Nylon 610, Nylon 612, Nylon 6/66, Nylon 6/66/12, Nylon 6/66/610, Nylon MXD6, Nylon 6T, Nylon 6/6T, Nylon 9T, aromatic nylon and an ethylene vinyl alcohol copolymer.
[3] The laminate according to [1] or [2], wherein the rubber particles are particles of at least one rubber selected from the group consisting of a brominated isobutylene-para-methylstyrene copolymer and a maleic anhydride-modified ethylene-α-olefin copolymer.
[4] The laminate according to any one of [1] to [3], wherein the rubber composition comprises a condensate of formaldehyde and a compound represented by Formula (1): 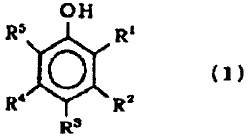 [wherein, R¹, R², R³, R⁴ and R⁵ represent hydrogen atoms, hydroxyl groups or alkyl groups having 1 to 8 carbon atoms], a methylene donor and a vulcanizing agent.
[5] The laminate according to [4], wherein the amount of the condensate is 0.5 parts by weight to 20 parts by weight based on 100 parts by weight of diene-based rubber in the rubber composition, the amount of the methylene donor is 0.25 parts by weight to 200 parts by weight based on 100 parts by weight of the diene-based rubber, the ratio of the amount of the methylene donor to the amount of the condensate is 0.5 to 10, and the vulcanizing agent is sulfur or an organic peroxide.
[6] The laminate according to any one of [1] to [3], wherein the rubber composition comprises 10 parts by weight to 100 parts by weight of an epoxy group-containing polymer as a rubber component based on 100 parts by weight of the rubber component.
[7] The laminate according to [6], wherein the epoxy group-containing polymer is at least one epoxy group-containing polymer selected from the group consisting of epoxidized natural rubber, epoxidized polybutadiene, epoxidized polyisoprene rubber, epoxidized styrene-butadiene-styrene block copolymer, epoxy-modified ethylene-methyl acrylate copolymer, ethylene-glycidyl methacrylate copolymer and ethylene-glycidyl methacrylate-vinyl acetate copolymer.
[8] The laminate according to any one of [1] to [3], wherein the rubber composition comprises chlorosulfonated polyethylene.
[9] The laminate according to any one of [1] to [8], wherein the thickness of the film composed of a thermoplastic elastomer composition is 10 µm to 500 µm.
[10] A pneumatic tire comprising the laminate according to any one of [1] to [9].
[11] A method for producing the laminate according to any one of [1] to [9], comprising the steps of:
   (i) producing the film composed of a thermoplastic elastomer composition by either extruding a thermoplastic elastomer composition with a T-die extrusion molding apparatus at cylinder and die temperatures of 200°C to 250°C each and a take-up speed of 2 m/min to 30 m/min, or extruding with an inflation die extrusion molding apparatus at cylinder and die temperatures of 200°C to 250°C each, a take-up speed of 3 m/min to 30 m/min and a blow ratio of 1.5 to 5, and
   (ii) laminating a rubber composition on the film obtained in (i) followed by heating and pressing.

### ADVANTAGEOUS EFFECTS OF INVENTION

The laminate of the present invention has superior adhesive strength at the interface between layers of a film composed of a thermoplastic elastomer composition and a rubber composition.

### DESCRIPTION OF EMBODIMENTS

The film that composes the laminate of the present invention is composed of a thermoplastic elastomer composition in which rubber particles are dispersed in a thermoplastic resin. In the thermoplastic elastomer composition, the thermoplastic resin composes the matrix phase, and the rubber particles compose the dispersed phase.

In the present invention, examples of the thermoplastic resin that composes the thermoplastic elastomer composition include polyamide-based resins, polyester-based resins, polynitrile-based resins, polymethacrylate-based resins, polyvinyl-based resins, cellulose-based resins, fluorine-based resins, imide-based resins, polystyrene-based resins and polyolefin-based resins. Examples of polyamide-based resins include Nylon 6 (N6), Nylon 66 (N66), Nylon 46 (N46), Nylon 11 (N11), Nylon 12 (N12), Nylon 69 (N69), Nylon 610 (N610), Nylon 612 (N612), Nylon 6/66 (N6/66), Nylon 6/66/12 (N6/66/12), Nylon 6/66/610 (N6/66/610), Nylon MXD6 (MXD6), Nylon 6T, Nylon 6/6T, Nylon 9T, Nylon 66/PP copolymer, Nylon 66/PPS copolymer and aromatic Nylon. Examples of polyester-based resins include aromatic polyesters such as polybutylene terephthalate (PBT), polyethylene terephthalate (PET), polyethylene isobutyrate (PEI), PET/PEI copolymer, polyarylate (PAR), polybutylene naphthalate (PBN), liquid crystal polyester or polyoxyalkylene dimide diacid-polybutylene terephthalate copolymer. Examples of polynitrile-based resins include polyacrylonitrile (PAN), polymethacrylonitrile, acrylonitrile-styrene copolymer (AS), methacrylonitrile-styrene copolymer and methacrylonitrile-styrene-butadiene copolymer. Examples of polymethacrylate-based resins include poly(methyl methacrylate) (PMMA) and poly(ethyl methacrylate). Examples of polyvinyl-based resins include polyvinyl acetate (PVAc), polyvinyl alcohol (PVA), ethylene-vinyl alcohol copolymer (EVOH), polyvinylidene chloride (PVDC), polyvinyl chloride (PVC), vinyl chloride-vinylidene chloride copolymer and vinylidene chloride-methyl acrylate copolymer. Examples of cellulose-based resins include cellulose acetate and cellulose acetate butyrate. Examples of fluorine-based resins include polyvinylidene fluoride (PVDF), polyvinyl fluoride (PVF), polychlorofluoroethylene (PCTFE) and tetrafluoroethylene-ethylene copolymer (ETFE). Examples of imide-based resins include aromatic polyimides (PI). Examples of polystyrene-based resins include polystyrene (PS). Examples of polyolefin-based resins include polyethylene (PE) and polypropylene (PP). The thermoplastic resin may also be a mixture of two or more types of thermoplastic resins.

Among the aforementioned thermoplastic resins, at least one thermoplastic resin selected from the group consisting of Nylon 6, Nylon 66, Nylon 46, Nylon 11, Nylon 12, Nylon 69, Nylon 610, Nylon 612, Nylon 6/66, Nylon 6/66/12, Nylon 6/66/610, Nylon MXD6, Nylon 6T, Nylon 6/6T, Nylon 9T, aromatic Nylon and an ethylene-vinyl alcohol copolymer is preferable from the viewpoints of both fatigue resistance and air impermeability.

In the present invention, a compounding agent ordinarily incorporated in resin compositions, such as a filler (such as calcium carbonate, titanium dioxide or alumina), a reinforcing agent (such as carbon black or white carbon), a processing aid, a stabilizer or an antioxidant, may be incorporated in the thermoplastic resin within a range that does not impair the effects of the present invention in order to improve processability, dispersibility, heat resistance or oxidation resistance and the like. A plasticizer may also be incorporated within a range that does not impair the effects of the present invention, although it is preferably not incorporated from the viewpoints of air impermeability and heat resistance.

In the present invention, examples of rubber particles that compose the thermoplastic elastomer composition include particles of diene-based rubber and hydrogenation products thereof, olefin-based rubber, halogen-containing rubber, silicone rubber, sulfur-containing rubber and fluorine-containing rubber. Examples of diene-based rubber and hydrogenation products thereof include natural rubber (NR), isoprene rubber (IR), epoxidized natural rubber (ENR), styrene-butadiene rubber (SBR), butadiene rubber (BR) (including high-cis BR and low-cis BR), acrylonitrile-butadiene rubber (NBR), hydrogenated NBR and hydrogenated SBR. Examples of olefin-based rubber include ethylene-propylene rubber (EPM), ethylene-propylene-diene rubber (EPDM), maleic anhydride-modified ethylene-propylene rubber (M-EPM), maleic anhydride-modified ethylene-α-olefin copolymer, ethylene-glycidyl methacrylate copolymer, maleic anhydride-modified ethylene-ethyl acrylate copolymer (modified EEA), butyl rubber (IIR), isobutylene and aromatic vinyl or diene-based monomer copolymers, acrylic rubber (ACM) and ionomers. Examples of halogen-containing rubber include halogenated butyl rubber such as brominated butyl rubber (Br-IIR) or chlorinated butyl rubber (Cl-IIR), brominated isobutylene-para-methylstyrene copolymer (BIMS), halogenated isobutylene-isoprene copolymer rubber, chloroprene rubber (CR), hydrin rubber (CHR), chlorosulfonated polyethylene (CSM), chlorinated polyethylene (CM) and maleic acid-modified chlorinated polyethylene (M-CM). Examples of silicone rubber include methyl vinyl silicone rubber, dimethyl silicone rubber and methyl phenyl vinyl silicone rubber. Examples of sulfur-containing rubber include polysulfide rubber. Examples of fluorine-containing rubber include vinylidene fluoride-based rubber, fluorine-containing vinyl ether-based rubber, tetrafluoroethylene-propylene-based rubber, fluorine-containing silicone-based rubber and fluorine-containing phosphazene-based rubber. The rubber particles may also be a mixture of two or more types of rubber particles.

Among the aforementioned rubber particles, particles of at least one rubber selected from the group consisting of brominated isobutylene-para-methylstyrene copolymer and maleic anhydride-modified ethylene-α-olefin copolymer is preferable from the viewpoint of air impermeability.

The rubber particles that compose the thermoplastic elastomer composition of the present invention are preferably at least partially crosslinked, and more preferably dynamically crosslinked, using a crosslinking agent. Dynamic crosslinking can be carried out by melting and kneading the thermoplastic resin and rubber particles in the presence of a crosslinking agent at a temperature at least equal to or higher than the melting point of the thermoplastic resin. As a result of dynamic crosslinking, the dispersed phase can be stabilized (or immobilized) in the continuous phase in the thermoplastic elastomer composition. There are no particular limitations on the crosslinking agent, the crosslinking agent can be suitably selected corresponding to the composition of the rubber particles, and may be an inorganic crosslinking agent or organic crosslinking agent. Examples of inorganic crosslinking agents include sulfur, sulfur monochloride, selenium, tellurium, zinc oxide, magnesium oxide and lead monoxide, while examples of organic crosslinking agents include sulfur-containing organic compounds, dithiocarbamates, oximes, tetrachloro-p-benzoquinone, dinitroso compounds, modified phenol resins, polyamines and organic peroxides. In addition, amine-based anti-aging agents, which are typically not crosslinking agents but function as crosslinking agents in some types of rubber, are also included in crosslinking agents in the present invention. Examples of such anti-aging agents include N-phenyl-N'-(1,3-dimethylbutyl)-p-phenylenediamine (6PPD) and 2,2,4-trimethyl-1,2-dihydroquinoline copolymer (TMDQ). Sulfur, organic peroxides, zinc oxide and N-phenyl-N'-(1,3-dimethylbutyl)-p-phenylenediamine (6PPD) are preferable for use as crosslinking agents of rubber particles in the present invention.

Compounding agents ordinarily incorporated in rubber compositions may be incorporated in the aforementioned rubber particles within a range that does not impair the effects of the present invention, examples of which include reinforcing agents (such as carbon black or silica), softening agents, anti-aging agents and processing assistants.

In the present invention, the thermoplastic elastomer composition can contain various additives within a range that does not impair the effects of the present invention.

In the present invention, although there are no particular limitations on the weight ratio of the thermoplastic resin to rubber particles in the thermoplastic elastomer composition (weight of thermoplastic resin/weight of rubber particles), it is preferably 10/90 to 90/10 and more preferably 15/85 to 90/10.

In the present invention, the Sdr (Developed Interfacial Area Ratio) value of the film composed of a thermoplastic elastomer composition is an indicator of surface roughness as specified in ISO25178. Namely, Sdr refers to the developed area ratio of a film interface that is calculated as the ratio of the increase in the developed area (surface area) of an evaluated region of a measured surface to the area of that evaluated region. For example, an interface having large surface area irregularities covering a large surface area has a large Sdr value. Sdr value is measured using a laser scanning confocal microscope, for example.

In the present invention, the Sdr value of the film composed of a thermoplastic elastomer composition is 0.042 or more, preferably 0.057 or more and even more preferably 0.100 or more. The use of a film having this Sdr value makes it possible to produce a laminate having high adhesive strength at the interface between layers of the film and the rubber composition.

In the present invention, although there are no particular limitations thereon, the thickness of the film composed of a thermoplastic elastomer composition is preferably 10 µm to 500 µm, and more preferably 50 µm to 200 µm, from the viewpoints of maintaining the gas barrier performance of the film and maintaining retention to the inside of the tire.

In the present invention, the thermoplastic elastomer composition can be produced by melting and kneading the aforementioned essential components and optional additives using a kneading extruder ordinarily used in the production of thermoplastic resin compositions, such as a kneader, Banbury mixer, single-screw kneading extruder or twin-screw kneading extruder. Melting and kneading are preferably carried out using a twin-screw kneading extruder based on the high level of productivity thereof. Although kneading conditions are dependent on the types and incorporated amounts of essential components and optional additives used, the lower limit of the melting and kneading temperature is at least equal to or higher than the melting point of the thermoplastic resin, and is preferably about 20°C or more higher than the melting point of the thermoplastic resin. The melting and kneading temperature is typically about 200°C to about 250°C. The duration of melting and kneading is typically about 1 minute to about 10 minutes and preferably about 2 minutes to about 6 minutes.

The thermoplastic elastomer composition that is produced may be, for example, extruded into the shape of a strand, pelletized with a resin pelletizer, and then supplied to a film molding step. Alternatively, the thermoplastic elastomer composition that has been melted and kneaded in a kneader may be discharged from a die attached to the discharge port of the kneader in a molten state and then supplied to a film molding step. Although there are no particular limitations thereon, the film molding step is carried out by, for example, using a T-die extrusion molding apparatus or inflation die extrusion molding apparatus.

In the present invention, a film having an Sdr value of 0.042 or more can be produced by optimizing conditions of the thermoplastic elastomer composition obtained in the manner described above during film molding. For example, in the case of using a T-die extrusion molding apparatus, a film having an Sdr value of 0.042 or more can be produced by extruding the thermoplastic elastomer composition at cylinder and die temperatures of 200°C to 250°C each, and preferably 210°C to 240°C each, and at a take-up speed of 2 m/min to 30 m/min, and preferably 5 m/min to 20 m/min.

In addition, in the case of, for example, using an inflation die extrusion molding apparatus, a film having an Sdr value of 0.042 or more can be produced by extruding the thermoplastic elastomer composition at cylinder and die temperatures of 200°C to 250°C each, and preferably 210°C to 240°C each, at a take-up speed of 3 m/min to 30 m/min, and preferably 4 m/min to 20 m/min, and at a blow ratio of 1.5 to 5.0 and preferably 2.0 to 4.0.

In the present description, the "cylinder and die temperatures" may be the same or different. The "take-up speed" refers to the speed at which the film is taken up. The "blow ratio" refers to the ratio R_{L}/R₀ between the final bubble radius R_{L} and the radius of the annular die R₀.

The rubber composition that composes the laminate of the present invention contains a rubber component. Examples of rubber components include diene-based rubber and hydrogenation products thereof, olefin-based rubber, halogen-containing rubber, silicone rubber, sulfur-containing rubber and fluorine-containing rubber. Examples of diene-based rubber and hydrogenation products thereof include natural rubber (NR), isoprene rubber (IR), epoxidized natural rubber (ENR), styrene-butadiene rubber (SBR), butadiene rubber (BR) (including high-cis BR and low-cis BR), acrylonitrile-butadiene rubber (NBR), hydrogenated NBR and hydrogenated SBR, epoxidized polybutadiene rubber, epoxidized polyisoprene rubber and epoxidized styrene-butadiene-styrene block copolymer. Examples of olefin-based rubber include ethylene-propylene rubber (EPM), ethylene-propylene-diene rubber (EPDM), maleic anhydride-modified ethylene-propylene rubber (M-EPM), maleic anhydride-modified ethylene-α-olefin copolymer, ethylene-glycidyl methacrylate copolymer, maleic anhydride-modified ethylene-ethyl acrylate copolymer (modified EEA), butyl rubber (IIR), isobutylene and aromatic vinyl or diene-based monomer copolymers, acrylic rubber (ACM) and ionomers, epoxy-modified ethylene-methyl acrylate copolymer and ethylene-glycidyl methacrylate-vinyl acetate copolymer. Examples of halogen-containing rubber include halogenated butyl rubber such as brominated butyl rubber (Br-IIR) or chlorinated butyl rubber (Cl-IIR), brominated isobutylene-p-methylstyrene copolymer (BIMS), halogenated isobutylene-isoprene copolymer rubber, chloroprene rubber (CR), hydrin rubber (CHR), chlorosulfonated polyethylene (CSM), chlorinated polyethylene (CM) and maleic acid-modified chlorinated polyethylene (M-CM). Examples of silicone rubber include methyl vinyl silicone rubber, dimethyl silicone rubber and methyl phenyl vinyl silicone rubber. Examples of sulfur-containing rubber include polysulfide rubber. Examples of fluorine-containing rubber include vinylidene fluoride-based rubber, fluorine-containing vinyl ether-based rubber, tetrafluoroethylene-propylene-based rubber, fluorine-containing silicone-based rubber and fluorine-containing phosphazene-based rubber. Among these, diene-based rubber, olefin-based rubber and halogen-containing rubber are preferable, while diene-based rubber is more preferable, from the viewpoint of co-crosslinkability with adjacent rubber materials. The rubber component may also be a mixture of two or more rubber components.

The rubber composition that composes the laminate of the present invention may also contain an adhesive component in order to further improve adhesive strength at the interface between layers of the film, composed of a thermoplastic elastomer composition, and the rubber composition. The adhesive component in the rubber composition may be uniformly present throughout the rubber composition or may be present at an interface region where the rubber composition contacts the film.

The rubber composition that composes the laminate of the present invention is able to further improve adhesive strength at the interface between layers of the film and rubber composition by containing an adhesive component in the form of an epoxy group-containing polymer as a rubber component. Although there are no particular limitations thereon, the amount of the epoxy group-containing polymer may be 10 parts by weight to 100 parts by weight based on 100 parts by weight of the rubber component in the rubber composition. Examples of the epoxy group-containing polymer include at least one type selected from the group consisting of epoxidized natural rubber, epoxidized polybutadiene rubber, epoxidized polyisoprene rubber, epoxidized styrene-butadiene-styrene block copolymer, epoxy-modified ethylene-methyl acrylate copolymer, ethylene-glycidyl methacrylate copolymer and ethylene-glycidyl methacrylate-vinyl acetate copolymer.

The rubber composition that composes the laminate of the present invention preferably further contains a condensate of formaldehyde and a compound represented by Formula (1): 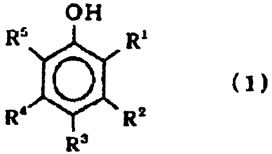 [wherein, R¹, R², R³, R⁴ and R⁵ represent hydrogen atoms, hydroxyl groups or alkyl groups having 1 to 8 carbon atoms] and a methylene donor. The rubber composition that composes the laminate of the present invention is able to further improve adhesive strength between layers of the film and rubber composition by containing this condensate and a methylene donor.

A preferable example of a compound represented by Formula (1) is that in which at least one of R¹, R², R³, R⁴ and R⁵ represents an alkyl group having 1 to 8 carbon atoms while the remainder represent hydrogen atoms or alkyl groups having 1 to 8 carbon atoms. A specific preferable example of a compound represented by Formula (1) is cresol.

Another preferable example of a compound represented by Formula (1) is that in which at least one of R¹, R², R³, R⁴ and R⁵ represents a hydroxyl group and the remainder represent hydrogen atoms or alkyl groups having 1 to 8 carbon atoms. A specific preferable example of a compound represented by Formula (1) is resorcinol.

Examples of condensates of formaldehyde and compounds represented by Formula (1) include cresolformaldehyde condensates and resorcinol-formaldehyde condensates. In addition, these condensates may be modified within a range that does not impair the effects of the present invention. For example, a modified resorcinol-formaldehyde condensate that has been modified with an epoxy compound can also be used in the present invention. These condensates are available commercially, and a commercially available product can be used in the present invention.

The condensate of formaldehyde and a compound represented by Formula (1) is preferably a compound represented by Formula (2) or Formula (3): 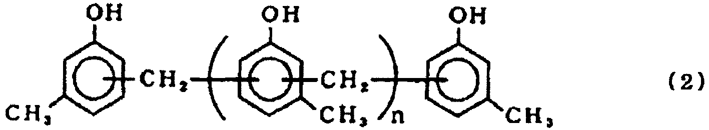 [wherein, n represents an integer of 1 to 20, preferably an integer of 1 to 10 and more preferably an integer of 1 to 5]; or 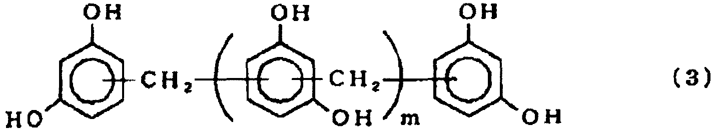 [wherein, m represents an integer of 1 to 20, preferably an integer of 1 to 10 and more preferably an integer of 1 to 3].

The amount of a condensate of formaldehyde and a compound represented by Formula (1) (to also be simply referred to as the "condensate") is preferably 0.5 parts by weight to 20 parts by weight, and more preferably 1 part by weight to 10 parts by weight, based on 100 parts by weight of the rubber component (and preferably, diene-based rubber) from the viewpoint of vulcanization efficiency.

In the case the rubber composition that composes the laminate of the present invention comprises a condensate of formaldehyde and a compound represented by Formula (1), the composition preferably also comprises a methylene donor. A methylene donor refers to a basic compound that generates formaldehyde when heated, and examples thereof include hexamethylenetetramine, pentamethylenetetramine, hexamethylenediamine, methylolmelamine, etherified methylolmelamine, modified etherified methylolmelamine, esterified methylolmelamine, hexamethoxymethylolmelamine, hexamethylolmelamine, hexakis(ethoxymethyl)melamine, hexakis(methoxymethyl)melamine, N,N',N"-trimethyl-N,N',N"-trimethylolmelamine, N,N',N"-trimethylolmelamine, N-methylolmelamine, N,N'-bis(methoxymethyl)melamine, N,N',N"-tributyl-N,N',N"-trimethylolmelamine and paraformaldehyde. Among these, modified etherified methylolmelamine is preferable from the viewpoint of the release temperature of formaldehyde.

The amount of the methylene donor is preferably 0.25 parts by weight to 200 parts by weight, and more preferably 0.5 parts by weight to 80 parts by weight, based on 100 parts by weight of the rubber component (and preferably, diene-based rubber) from the viewpoint of improving adhesive strength at the interface between layers of the film and rubber composition.

The ratio of the amount of methylene donor to the amount of the condensate is preferably 0.5 to 10, and more preferably 1 to 4, from the viewpoint of improving adhesive strength at the interface between layers of the film and rubber composition.

The rubber composition that composes the laminate of the present invention may also comprise chlorosulfonated polyethylene as an adhesive component from the viewpoint of improving adhesive strength at the interface between the film and rubber composition. In this case, the chlorosulfonated polyethylene can be present at a boundary region where the rubber composition contacts the film.

The rubber composition that composes the laminate of the present invention also normally comprises a vulcanizing agent. Vulcanizing agents consist of inorganic vulcanizing agents and organic vulcanizing agents, examples of inorganic vulcanizing agents include sulfur, sulfur monochloride, selenium, tellurium, zinc oxide, magnesium oxide and lead monoxide, and examples of organic vulcanizing agents include sulfur-containing organic compounds, dithiocarbamates, oximes, tetrachloro-p-benzoquinone, dinitroso compounds, modified phenol resins, polyamines and organic peroxides. Among these, sulfur and organic peroxides are preferable.

Various types of additives ordinarily used in the production of tires, such as reinforcing agents, vulcanization assistants, vulcanization accelerators, anti-scorching agents, anti-aging agents, peptizers, organic modifiers or tackifiers, can be further incorporated in the rubber composition, and the incorporated amounts of these additives can be the same as conventionally used additives provided they do not conflict with the object of the present invention.

Although there are no particular limitations thereon, the thickness of the layer of the rubber composition that composes the laminate of the present invention is preferably 0.15 mm to 2.00 mm, and more preferably 0.4 mm to 1.5 mm, from the viewpoints of improving adhesion at the interface between layers of the film and rubber composition and avoiding increases in tire weight.

The laminate of the present invention can be produced by laminating a rubber composition on a film composed of a thermoplastic elastomer composition and having an Sdr value of 0.042 or more, followed by heating and pressing. More specifically, the laminate can be produced by laminating a preliminarily produced rubber composition simultaneous to rolling with calender rollers and the like, followed by heating and pressing. Alternatively, the laminate can be produced by laminating the rubber composition simultaneous to extruding onto a preliminarily produced film using a T-die extruder and the like, followed by heating and pressing. In addition, the laminate can also be produced by manually laminating a rubber composition, preliminarily processed into the form of a sheet, with a preliminarily produced film using a hand roller, followed by heating and pressing. In addition, the laminate can also be produced by coating a composition containing an adhesive component on a film composed of a thermoplastic elastomer composition by dissolving in an arbitrary solvent (such as toluene) and then laminating a rubber composition thereon followed by heating and pressing. The temperature in the heating and pressing step is preferably 150°C to 200°C, the pressure is preferably 0.5 MPa to 10 MPa, and the duration is preferably 5 minutes to 40 minutes. Although there are no particular limitations on the timing of the heating and pressing step, it may be carried out soon after having laminated the rubber composition on the film, or when producing a final product employing the laminate of the present invention as a constituent member thereof by using the laminate following the production thereof in the state prior to heating and pressing. For example, in the case the laminate of the present invention is used as an air permeation preventive layer of a pneumatic tire as indicated below, the rubber composition may be laminated on the film, and the resulting laminate may be subjected to a heating and pressing step after incorporating the laminate in a portion of a green tire.

The laminate of the present invention can be used as, for example, an air permeation preventive layer (such as an inner liner material) of a pneumatic tire. A commonly used method can be used to produce a pneumatic tire incorporating the laminate of the present invention. For example, a laminate produced in the manner described above is placed on a tire molding drum prior to heating and pressing so that the film side faces the tire molding drum, and members ordinarily used in the production of tires, such as a carcass layer, belt layer and tread layer composed of unvulcanized rubber, are sequentially layered thereon, followed by molding and removal of the drum to obtain a green tire. Next, the green tire is subjected to vulcanization in accordance with ordinary methods to enable the production of the pneumatic tire of the present invention.

### EXAMPLES

Although the following provides a more detailed explanation of the present invention with reference to the examples and comparative examples indicated below, it goes without saying that the scope of the present invention is not limited by these examples.

### (1) Production of Thermoplastic Elastomer Composition

Br-IPMS listed as a raw material in Table 1 was preliminarily processed into the form of pellets with a rubber pelletizer (Moriyama Manufacturing Co., Ltd.). The rubber pellets, thermoplastic resins (Nylon 6 and Nylon 612), acid-modified elastomer and crosslinking agents were placed in a twin-screw kneading extruder at incorporated amounts shown in Table 1 followed by kneading for 3 minutes at 250°C. The kneaded product was continuously extruded into a strand from the extruder and cooled followed by cutting with a cutter to obtain a pelletized thermoplastic elastomer composition.

**Table 1 Formulation of Thermoplastic Elastomer Composition**

| | | Amount (parts by weight) |
|---|---|---|
| Rubber particles | Br-IPMS^{*1} | 70.0 |
| | Acid-modified elastomer^{*2} | 30.0 |
| Thermoplastic resins | Nylon 6^{*3} | 52.0 |
| | Nylon 612^{*4} | 12.0 |
| Crosslinking agents | Zinc oxide^{*5} | 5.0 |
| | Stearic acid^{*6} | 1.5 |
| | 6PPD^{*7} | 3.0 |

| | | |
|---|---|---|
| *1: ExxonMobil Chemical Co., brominated isobutylene-p-methylstyrene copolymer rubber, Exxpro® MDX89-4 *2: ExxonMobil Chemical Co., maleic acid-modified ethylene-propylene copolymer, Exxcelor® VA1803 *3: Ube Industries, Ltd., Ube Nylon 1013B *4: Ube Industries, Ltd., Ube Nylon 7034B *5: Seido Chemical Industry Co., Ltd., Grade 3 zinc oxide *6: NOF Corp., Beads stearic acid *7: FlexSys Inc., Santoflex 6PPD | | |

### (2) Production of Film Composed of Thermoplastic Elastomer Composition Using T-Die Extrusion Molding Apparatus

The thermoplastic elastomer composition obtained in (1) was extruded into sheets having a thickness of 0.2 mm under the conditions described in Tables 8, 10 and 11 using a T-die extrusion molding apparatus having a die width of 400 mm (Pla Giken Co., Ltd.) to obtain films used to produce the laminates of Comparative Examples 1 to 4, Examples 1 to 4 and Examples 11 to 18. The surface profiles of the resulting films were measured with a laser microscope (Keyence Corp.) to obtain the Sdr value of each film in accordance with ISO25178. The resulting Sdr values are shown in Tables 8, 10 and 11.

### (3) Production of Film Composed of Thermoplastic Elastomer Composition Using Inflation Die Extrusion Molding Apparatus

The thermoplastic elastomer composition obtained in (1) was extruded into the shape of a cylinder having a thickness of 0.1 mm under the conditions shown in Tables 9 and 12 to 14 using an extrusion molding apparatus equipped with an inflation die having a die caliber of 100 mm (Brampton Engineering, Inc.) to obtain films used to produce the laminates of Examples 5 to 10 and Examples 19 to 36. The surface profiles of the resulting films were measured with a laser microscope (Keyence Corp.) to obtain the Sdr value of each film in accordance with ISO25178. The resulting Sdr values are shown in Tables 9 and 12 to 14.

### (4) Production of Rubber Compositions 1 to 4

The raw materials shown in Tables 2 to 5, with the exception of the vulcanization accelerators and sulfur, were mixed for 5 minutes using a Type B Banbury mixer (1.8 L) manufactured by Kobe Steel Ltd., followed by kneading a vulcanization accelerator and sulfur into this mixture for 4 minutes using an open roll kneading machine (Kansai Roll Co., Ltd.) to obtain rubber compositions 1 to 4.

**Table 2 Formulation of Rubber Composition 1**

| | Amount (parts by weight) |
|---|---|
| Natural rubber^{*1} | 50.0 |
| SBR^{*2} | 50.0 |
| Carbon black^{*3} | 60.0 |
| Modified resorcinol-formaldehyde copolymer^{*4} | 3.0 |
| Methylene donor^{*5} | 6.0 |
| Oil^{*6} | 7.0 |
| Stearic acid^{*7} | 1.0 |
| Zinc oxide^{*8} | 3.0 |
| Sulfur^{*9} | 2.0 |
| Vulcanization accelerator^{*10} | 2.2 |

| | |
|---|---|
| *1: NUSIRA PT, Natural Rubber TSR20 *2: Zeon Corp., "Nipol 1502" *3: Tokai Carbon Co., Ltd., "Seast V" *4: Taoka Chemical Co., Ltd., "Sumikanol 620" *5: Modified etherified methylolmelamine, Taoka Chemical Co., Ltd., "Sumikanol 507AP" *6: Showa Shell Sekiyu K.K., "Desolex #3" *7: Chiba Fatty Acid Co., Ltd., Industrial Stearic Acid *8: Seido Chemical Industry Co., Ltd., "Grade 3 zinc oxide" *9: Hosoi Chemical Industry Co., Ltd., "Oil-treated sulfur" *10: Di-2-benzothiazolyl disulfide (Ouchi Shinko Chemical Industrial Co., Ltd., "Nocceler") | |

**Table 3 Formulation of Rubber Composition 2**

| | Incorporated Amount (parts by weight) |
|---|---|
| Natural rubber^{*1} | 60.0 |
| Epoxidized natural rubber^{*1} | 40.0 |
| Carbon black^{*3} | 50.0 |
| Zinc oxide^{*4} | 3.0 |
| Stearic acid^{*5} | 1.0 |
| Sulfur^{*6} | 2.0 |
| Vulcanization accelerator^{*7} | 1.0 |
| Tackifier^{*8} | 8.0 |

| | |
|---|---|
| *1: NUSIRA PT, Natural Rubber TSR20 *2: Muang Mai Guthrie Public Co., Ltd., "Epoxyprene 50 (ENR50)" (epoxidation rate: 50%) *3: Mitsubishi Chemical Corp., "Diablack G" *4: Taoka Chemical Co., Ltd., "Grade 3 zinc oxide" *5: Chiba Fatty Acid Co., Ltd., Industrial Stearic Acid *6: Hosoi Chemical Industry Co., Ltd., "Oil-treated sulfur" *7: Ouchi Shinko Chemical Industrial Co., Ltd., "Nocceler CZ-G" *8: BASF Corp., "Koresin" | |

**Table 4 Formulation of Rubber Composition 3**

| | Incorporated Amount (parts by weight) |
|---|---|
| Styrene-butadiene rubber^{*1} | 50.0 |
| Epoxidized polymer^{*1} | 50.0 |
| Carbon black^{*3} | 50.0 |
| Zinc oxide^{*4} | 3.0 |
| Stearic acid^{*5} | 1.0 |
| Sulfur^{*6} | 2.0 |
| Vulcanization accelerator^{*7} | 1.0 |
| Tackifier^{*8} | 8.0 |

| | |
|---|---|
| *1: Zeon Corp., "Nipol 1502" *2: Daicel Chemical Industries, Ltd., epoxidized styrene-butadiene-styrene block copolymer, "Epoblend AT501" *3: Mitsubishi Chemical Corp., "Diablack G" *4: Taoka Chemical Co., Ltd., "Grade 3 zinc oxide" *5: Chiba Fatty Acid Co., Ltd., "Industrial Stearic Acid" *6: Hosoi Chemical Industry Co., Ltd., "Oil-treated sulfur" *7: Ouchi Shinko Chemical Industrial Co., Ltd., "Nocceler TOT-N" *8: BASF Corp., "Koresin" | |

**Table 5 Formulation of Resin Composition 4**

| | Incorporated Amount (parts by weight) |
|---|---|
| Natural rubber^{*1} | 50.0 |
| Styrene-butadiene rubber^{*2} | 50.0 |
| Carbon black^{*3} | 50.0 |
| Zinc oxide^{*4} | 3.0 |
| Stearic acid^{*5} | 2.0 |
| Oil^{*5} | 10.0 |
| Wax^{*7} | 1.0 |
| Sulfur^{*8} | 2.0 |
| Vulcanization accelerator^{*9} | 1.0 |
| Anti-aging agent^{*10} | 2.2 |

| | |
|---|---|
| *1: NUSIRA PT, Natural Rubber TSR20 *2: Zeon Corp., Nipol 1502 *3: Mitsubishi Chemical Corp., Diablack G *4: Taoka Chemical Co., Ltd., Grade 3 zinc oxide *5: Chiba Fatty Acid Co., Ltd., "Industrial Stearic Acid" *6: Showa Shell Sekiyu K.K., Extract #4S *7: Ouchi Shinko Chemical Industrial Co., Ltd., Sunnoc *8: Hosoi Chemical Industry Co., Ltd., Oil-treated sulfur *9: Ouchi Shinko Chemical Industrial Co., Ltd., Nocceler CZ-G *10: Ouchi Shinko Chemical Industrial Co., Ltd., Nocrac 224 | |

### (5) Production of Rubber Composition 5

The raw materials indicated in Table 6 were placed in a twin-screw kneading extruder (Japan Steel Works Ltd.) in the amounts shown followed by kneading for 3 minutes at 140°C. The kneaded product was continuously extruded into a strand from the extruder and cooled followed by cutting with a cutter to obtain a pelletized rubber composition 5.

**Table 6 Formulation of Rubber Composition 5**

| | Amount (parts by weight) |
|---|---|
| Epoxidized polymer^{*1} | 100.0 |
| Zinc oxide^{*2} | 5.0 |
| Stearic acid^{*3} | 1.0 |
| Vulcanization accelerator^{*4} | 3.0 |
| Tackifier^{*5} | 30.0 |

| | |
|---|---|
| *1: Daicel Chemical Industries, Ltd., epoxidized styrene-butadiene-styrene block copolymer, "Epofriend AT501" *2: Taoka Chemical Co., Ltd., "Grade 3 zinc oxide" *3: Chiba Fatty Acid Co., Ltd., "Industrial Stearic Acid" *4: Ouchi Shinko Chemical Industrial Co., Ltd., "Nocceler" TOT-N *5: Arakawa Chemical Industries, Ltd., "Arcon P140" | |

### (6) Laminate Production using Rubber Compositions 1 to 3

The rubber compositions 1 to 3 produced in (4) were milled to a thickness of 0.7 mm using an open roll kneading machine (Kansai Roll Co., Ltd.). Sheets of the milled rubber compositions 1 to 3 were pressed onto the films produced in (2) and (3) using a hand roller to produce unvulcanized laminates of Comparative Examples 1 to 4 and Examples 1 to 24.

### (7) Production of Composition Composed of Thermoplastic Elastomer Composition and Rubber Composition 5 or Composition Containing Chlorosulfonated Polyethylene

The rubber composition 5 obtained in (5) was coated onto the surface of the film of the thermoplastic elastomer composition obtained in (3) by dissolving in 10% toluene to obtain a composition composed of a thermoplastic elastomer composition and rubber composition 5.

In addition, a chlorosulfonated polyethylene-containing composition in the form of Chemlok 6250 (Lord Corp.) was coated onto the film of the thermoplastic elastomer composition obtained in (3) to obtain a composition composed of a thermoplastic elastomer composition and a chlorosulfonated polyethylene-containing composition.

### (8) Laminate Production Using Rubber Composition 4

The rubber composition produced in (4) was milled to a thickness of 0.7 mm using an open roll kneading machine (Kansai Roll Co., Ltd.). A sheet of the milled rubber composition 4 was pressed onto the side of the composition produced in (7) coated with rubber composition 5 or the chlorosulfonated polyethylene-containing composition using a hand roller to obtain laminates of Examples 25 to 36.

### (9) Evaluation

The laminates produced in the aforementioned sections (6) and (8) were evaluated for peel strength and tire peeling. The evaluation results are shown in Tables 8 to 14. Furthermore, the methods used to evaluate each parameter are described below.

### [Evaluation of Peel Strength]

Samples of the unvulcanized laminates produced in (6) and (8) were vulcanized for 10 minutes at a temperature of 175°C and pressure of 2.0 MPa, followed by cutting to a width of 25 mm and measuring the peel strength of the test strips in accordance with JIS-K6256 to obtain the peel strength for each sample. The measured peel strength (N/25 mm) was scored using the criteria indicated in the following Table 7. All scores other than 1 indicate a favorable range.

**Table 7**

| Score | Peel Strength (N/25 mm) |
|---|---|
| 1 | Less than 35 |
| 2 | 35 to less than 75 |
| 3 | 75 to less than 125 |
| 4 | 125 to less than 200 |
| 5 | 200 or more |

### [Evaluation of Tire Peeling]

The laminates produced in sections (6) and (8) were used as inner liner materials and vulcanized for 15 minutes at a temperature of 180°C and pressure of 2.3 MPa in accordance with ordinary methods to produce 195/65R15 size tires, after which the tires were installed on a front wheel drive passenger car having an engine displacement of 1800 cc using 15x6JJ rims at an internal pressure of 200 kPa and then driven on city streets for 30,000 km. Subsequently, the tires were removed from the rims and the inside surfaces were observed to confirm the presence or absence of peeling failures of the laminates used as inner liner materials. The absence of peeling was represented with a "O", while the presence of peeling was represented with a "x".

**Table 8**

| | Comp. Ex.1 | Comp. Ex.2 | Ex.1 | Ex.2 | Ex.3 | Ex.4 |
|---|---|---|---|---|---|---|
| Film molding apparatus | A | A | A | A | A | A |
| Cylinder and die temperatures (°C) | 185 | 190 | 200 | 250 | 210 | 240 |
| Take-up speed (m/min) | 0.8 | 35 | 2 | 30 | 20 | 5 |
| Sdr value | 0.019 | 0.025 | 0.042 | 0.043 | 0.057 | 0.251 |
| Rubber composition | 1 | 1 | 1 | 1 | 1 | 1 |
| Peel strength score | 1 | 1 | 2 | 2 | 3 | 5 |
| Tire evaluation | × | × | ○ | ○ | ○ | ○ |

| | | | | | | |
|---|---|---|---|---|---|---|
| A: T-die extrusion molding apparatus | | | | | | |

**Table 9**

| | Ex.5 | Ex.6 | Ex.7 | Ex.8 | Ex.9 | Ex.10 |
|---|---|---|---|---|---|---|
| Film molding apparatus | B | B | B | B | B | B |
| Cylinder and die temperatures (°C) | 200 | 220 | 250 | 210 | 240 | 230 |
| Take-up speed (m/min) | 30 | 3 | 20 | 20 | 4 | 10 |
| Blow ratio | 3 | 1.5 | 5 | 2 | 4 | 3 |
| Sdr value | 0.088 | 0.110 | 0.123 | 0.129 | 0.142 | 0.160 |
| Rubber composition | 1 | 1 | 1 | 1 | 1 | 1 |
| Peel strength score | 3 | 3 | 3 | 4 | 4 | 3 |
| Tire evaluation | ○ | ○ | ○ | ○ | ○ | ○ |

| | | | | | | |
|---|---|---|---|---|---|---|
| B: Inflation die extrusion molding apparatus | | | | | | |

**Table 10**

| | Comp. Ex.3 | Comp. Ex.4 | Ex.11 | Ex.12 | Ex.13 | Ex.14 |
|---|---|---|---|---|---|---|
| Film molding apparatus | A | A | A | A | A | A |
| Cylinder and die temperatures (°C) | 185 | 190 | 200 | 250 | 210 | 240 |
| Take-up speed (m/min) | 0.8 | 35 | 2 | 30 | 20 | 5 |
| Sdr value | 0.019 | 0.025 | 0.042 | 0.043 | 0.057 | 0.251 |
| Rubber composition | 2 | 2 | 2 | 2 | 2 | 2 |
| Peel strength score | 1 | 1 | 2 | 2 | 3 | 5 |
| Tire evaluation | × | × | ○ | ○ | ○ | ○ |

| | | | | | | |
|---|---|---|---|---|---|---|
| A: T-die extrusion molding apparatus | | | | | | |

**Table 11**

| | Ex. 15 | Ex.16 | Ex.17 | Ex.18 |
|---|---|---|---|---|
| Film molding apparatus | A | A | A | A |
| Cylinder and die temperatures (°C) | 200 | 250 | 210 | 240 |
| Take-up speed (m/min) | 2 | 30 | 20 | 5 |
| Sdr value | 0.042 | 0.043 | 0.057 | 0.251 |
| Rubber composition | 3 | 3 | 3 | 3 |
| Peel strength score | 2 | 2 | 2 | 4 |
| Tire evaluation | ○ | ○ | ○ | ○ |

| | | | | |
|---|---|---|---|---|
| A: T-die extrusion molding apparatus | | | | |

**Table 12**

| | Ex.19 | Ex.20 | Ex.21 | Ex.22 | Ex.23 | Ex.24 |
|---|---|---|---|---|---|---|
| Film molding apparatus | B | B | B | B | B | B |
| Cylinder and die temperatures (°C) | 200 | 220- | 250 | 210 | 240 | 230 |
| Take-up speed (m/min) | 30 | 3 | 20 | 20 | 4 | 10 |
| Blow ratio | 3 | 1.5 | 5 | 2 | 4 | 3 |
| Sdr value | 0.088 | 0.110 | 0.123 | 0.129 | 0.142 | 0.160 |
| Rubber composition | 2 | 2 | 2 | 2 | 2 | 2 |
| Peel strength score | 3 | 3 | 3 | 3 | 4 | 4 |
| Tire evaluation | ○ | ○ | ○ | ○ | ○ | ○ |

| | | | | | | |
|---|---|---|---|---|---|---|
| B: Inflation die extrusion molding apparatus | | | | | | |

**Table 13**

| | Ex.25 | Ex.26 | Ex.27 | Ex.28 | Ex.29 | Ex.30 |
|---|---|---|---|---|---|---|
| Film molding apparatus | B | B | B | B | B | B |
| Cylinder and die temperatures (°C) | 200 | 220 | 250 | 210 | 240 | 230 |
| Take-up speed (m/min) | 30 | 3 | 20 | 20 | 4 | 10 |
| Blow ratio | 3 | 1.5 | 5 | 2 | 4 | 3 |
| Sdr value | 0.088 | 0.110 | 0.123 | 0.129 | 0.142 | 0.160 |
| Rubber composition | 4+5 | 4+5 | 4+5 | 4+5 | 4+5 | 4+5 |
| Peel strength score | 2 | 2 | 2 | 2 | 3 | 3 |
| Tire evaluation | ○ | ○ | ○ | ○ | ○ | ○ |

| | | | | | | |
|---|---|---|---|---|---|---|
| B: Inflation die extrusion molding apparatus | | | | | | |

**Table 14**

| | Ex.31 | Ex.32 | Ex.33 | Ex.34 | Ex.35 | Ex.36 |
|---|---|---|---|---|---|---|
| Film molding apparatus | B | B | B | B | B | B |
| Cylinder and die temperatures (°C) | 200 | 220 | 250 | 210 | 240 | 230 |
| Take-up speed (m/min) | 30 | 3 | 20 | 20 | 4 | 10 |
| Blow ratio | 3 | 1.5 | 5 | 2 | 4 | 3 |
| Sdr value | 0.088 | 0.110 | 0.123 | 0.129 | 0.142 | 0.160 |
| Rubber composition | 5^{*1} | 5^{*1} | 5^{*1} | 5^{*1} | 5^{*1} | 5^{*1} |
| Peel strength score | 2 | 2 | 2 | 2 | 3 | 3 |
| Tire evaluation | ○ | ○ | ○ | ○ | ○ | ○ |

| | | | | | | |
|---|---|---|---|---|---|---|
| B: Inflation die extrusion molding apparatus *1: Including chlorosulfonated polyethylene | | | | | | |

The laminates of Examples 1 to 36, in which the Sdr values of the film composed of a thermoplastic elastomer composition were 0.042 or more, demonstrated superior adhesive strength at the interface between the layers of the film and rubber composition in comparison with the laminates of Comparative Examples 1 to 4, in which the Sdr values were less than 0.042. Moreover, the laminates of Examples 1 to 36 were observed to be free of peeling failures as a result of evaluating tires produced using those laminates.

### INDUSTRIAL APPLICABILITY

The laminate of the present invention can be preferably used as an air permeation preventive layer (such as an inner liner material) of a pneumatic tire.

## Claims

1. A laminate of a film and a rubber composition, the film being composed of a thermoplastic elastomer composition in which rubber particles are dispersed in a thermoplastic resin, wherein the Sdr value of the film in contact with the rubber composition is 0.042 or more.

2. The laminate according to claim 1, wherein the thermoplastic resin is at least one thermoplastic resin selected from the group consisting of Nylon 6, Nylon 66, Nylon 46, Nylon 11, Nylon 12, Nylon 69, Nylon 610, Nylon 612, Nylon 6/66, Nylon 6/66/12, Nylon 6/66/610, Nylon MXD6, Nylon 6T, Nylon 6/6T, Nylon 9T, aromatic nylon and an ethylene vinyl alcohol copolymer.

3. The laminate according to claim 1 or 2, wherein the rubber particles are particles of at least one rubber selected from the group consisting of a brominated isobutylene-para-methylstyrene copolymer and a maleic anhydride-modified ethylene-α-olefin copolymer.

4. The laminate according to any one of claims 1 to 3, wherein the rubber composition comprises a condensate of formaldehyde and a compound represented by Formula (1): 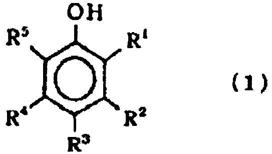 [wherein, R¹, R², R³, R⁴ and R⁵ represent hydrogen atoms, hydroxyl groups or alkyl groups having 1 to 8 carbon atoms], a methylene donor and a vulcanizing agent.

5. The laminate according to claim 4, wherein the amount of the condensate is 0.5 parts by weight to 20 parts by weight based on 100 parts by weight of diene-based rubber in the rubber composition, the amount of the methylene donor is 0.25 parts by weight to 200 parts by weight based on 100 parts by weight of the diene-based rubber, the ratio of the amount of the methylene donor to the amount of the condensate is 0.5 to 10, and the vulcanizing agent is sulfur or an organic peroxide.

6. The laminate according to any one of claims 1 to 3, wherein the rubber composition comprises 10 parts by weight to 100 parts by weight of an epoxy group-containing polymer as a rubber component based on 100 parts by weight of the rubber components.

7. The laminate according to claim 6, wherein the epoxy group-containing polymer is at least one epoxy group-containing polymer selected from the group consisting of epoxidized natural rubber, epoxidized polybutadiene, epoxidized polyisoprene rubber, epoxidized styrene-butadiene-styrene block copolymer, epoxy-modified ethylene-methyl acrylate copolymer, ethylene-glycidyl methacrylate copolymer and ethylene-glycidyl methacrylate-vinyl acetate copolymer.

8. The laminate according to any one of claims 1 to 3, wherein the rubber composition comprises chlorosulfonated polyethylene.

9. The laminate according to any one of claims 1 to 8, wherein the thickness of the film composed of a thermoplastic elastomer composition is 10 µm to 500 µm.

10. A pneumatic tire comprising the laminate according to any one of claims 1 to 9.

11. A method for producing the laminate according to any one of claims 1 to 9, comprising the following steps:
(i) producing the film composed of a thermoplastic elastomer composition by either extruding a thermoplastic elastomer composition with a T-die extrusion molding apparatus at cylinder and die temperatures of 200°C to 250°C each and a take-up speed of 2 m/min to 30 m/min, or extruding with an inflation die extrusion molding apparatus at cylinder and die temperatures of 200°C to 250°C each, a take-up speed of 3 m/min to 30 m/min and a blow ratio of 1.5 to 5, and
(ii) laminating a rubber composition on the film obtained in (i) followed by heating and pressing.
